# DEMANDE DE BREVET EUROPEEN

(11) **EP 4 652 846 A1**
(43) Date de publication de la demande: **26.11.2025**
(21) Numéro de dépôt: 24305815.3
(22) Date de dépôt: 24.05.2024
(51) Int. Cl.: A21C 3/04, A21C 3/10, A21C 11/10, A21C 11/16, B26D 1/12

(54) **DISPOSITIF DE FORMAGE DE PATES ALIMENTAIRES, INSTALLATION ET PROCEDE DE FABRICATION CORRESPONDANTS**

(71) Demandeur: Lustucru Frais, 69008 Lyon (FR)
(72) Inventeur: DREUX, Vincent, 69110 SAINTE FOY LES LYON (FR)
(74) Mandataire: Cabinet Didier Martin

(57) **Abrégé**

- Dispositif de formage de pâtes alimentaires, installation et procédé de fabrication correspondants.
- L'invention concerne un dispositif de formage (1) de pâtes alimentaires comprenant :
- des buses d'extrusion (2) pour former, en sortie desdites buses (2), des extrudats,
- un système de découpe (4) desdits extrudats,
caractérisé en ce que ledit système de découpe (4) est modulaire et comprend une pluralité de modules (5) comprenant chacun un noyau (5A) et au moins un couteau (5B, 5C, 5D) porté par le noyau (5A), lesdits modules (5) étant assemblés par leurs noyaux (5A) pour former un sous-ensemble unitaire de modules (5) monté mobile à rotation selon un axe de rotation (X-X').
- Dispositifs et procédés de fabrication de produits alimentaires.

## Description

La présente invention se rapporte au domaine général des produits alimentaires, et plus précisément au domaine technique des pâtes alimentaires.

La présente invention concerne en particulier un dispositif de formage de pâtes alimentaires destinées à être réchauffées et/ou cuites avant d'être consommées, ainsi qu'une installation et un procédé de fabrication de telles pâtes alimentaires.

Les pâtes alimentaires sont des aliments particulièrement prisés des consommateurs, en particulier lorsqu'elles se présentent sous la forme de palets, boudins, ou encore boulettes, comme par exemple les tortellinis, les ravioles...

Ces produits alimentaires peuvent être fabriqués de manière artisanale, mais aussi et surtout de façon industrielle, afin en particulier de répondre à la demande importante des consommateurs. Il est connu, pour fabriquer industriellement de telles pâtes alimentaires sous forme de palets, boudins ou boulettes, de recourir à une opération d'extrusion d'une composition pâteuse à travers des buses d'extrusion, disposées par exemple en ligne, afin de former de façon continue des extrudats qui sont automatiquement découpés en aval et à distance des sorties des buses pour former lesdits palets, boudins ou boulettes. Plus précisément, les extrudats issus de la rangée de buses d'extrusion sont découpés au moyen d'un rouleau de découpe qui porte des lames allongées enroulées sur toute sa longueur et qui est associé à un rouleau d'entraînement rotatif. Ledit rouleau de découpe est disposé à l'aval des buses d'extrusion, bien au-delà de la sortie de ces dernières, et il tourne selon un axe de rotation sensiblement parallèle à la rangée de buses d'extrusion.

Une telle installation de formage donne globalement satisfaction, notamment car elle permet d'atteindre des cadences de fabrication intéressantes. Elle n'en présente pas moins toutefois de sérieux inconvénients.

En particulier, la maintenance des installations connues décrites ci-avant s'avère être relativement complexe et onéreuse, et leur exploitation peut s'avérer délicate, avec là encore des coûts potentiellement élevés pour maintenir un niveau de qualité optimale.

Ces inconvénients s'expliquent notamment comme suit.

Tout d'abord, si une partie seulement de l'une des lames allongées du rouleau de découpe est endommagée, il est nécessaire de changer l'outillage complet, ce qui long, fastidieux et onéreux. De plus, les lames allongées mises en oeuvre dans l'art antérieur présentent une certaine flexibilité qui nuit à leur durabilité et à la précision de coupe.

En outre, il est prévu sur ces installations connues de pouvoir changer les buses d'extrusion, qui sont portées par une filière démontable. Il est ainsi possible de monter des buses spécifiquement adaptées à la forme et au calibre du produit que l'on souhaite fabriquer. Toutefois, un rouleau de découpe donné ne sera pas nécessairement adapté à n'importe quelle section de buse d'extrusion ni à n'importe quel écartement entre les buses. C'est pourquoi il est nécessaire, dans l'art antérieur, de recourir pour chaque filière à un outil de découpe spécifique, ce qui multiplie là encore les coûts et complique la maintenance.

Les objets assignés à l'invention visent par conséquent à remédier aux différents inconvénients exposés dans ce qui précède, et à proposer un nouveau dispositif de formage de pâtes alimentaires de conception extrêmement simple, polyvalente et universelle, qui permet de limiter les coûts d'exploitation et de maintenance et de s'adapter à tout type de forme et de calibre de pâtes, de façon facile et rapide.

Un autre objet de l'invention vise à proposer un nouveau dispositif de formage de pâtes alimentaires qui repose sur la mise en oeuvre d'un minimum de composants mécaniques différents et dont la fabrication est bon marché et facile à industrialiser.

Un autre objet de l'invention vise à proposer un nouveau dispositif de formage de pâtes alimentaires de construction compacte.

Un autre objet de l'invention vise à proposer un nouveau dispositif de formage dont la conception est susceptible de favoriser un farinage optimal de la composition pâteuse en sortie d'extrusion.

Un autre objet de l'invention vise à proposer un nouveau dispositif de formage de pâtes alimentaires dont la conception facilite tout particulièrement la maintenance, la réparation et le nettoyage.

Un autre objet de l'invention vise à proposer un nouveau dispositif de formage de pâtes alimentaires particulièrement précis et fiable.

Un autre objet de l'invention vise à proposer un nouveau dispositif de formage de pâtes alimentaires de construction particulièrement robuste et durable.

Un autre objet de l'invention vise à proposer de nouveaux installation et procédé de fabrication de pâtes alimentaires qui permettent de fabriquer des pâtes alimentaires dans des conditions industrielles optimales, de façon particulièrement rapide, fiable et bon marché, avec une maintenance facilitée et une possibilité d'adaptation aisée et rapide à différents types de pâtes.

Les objets assignés à l'invention sont atteints à l'aide d'un dispositif de formage de pâtes alimentaires destinées à être réchauffées et/ou cuites avant d'être consommées, ledit dispositif de formage comprenant :
- des buses d'extrusion par lesquelles est destinée à passer une composition pâteuse, pour former, en sortie desdites buses, des extrudats à partir desquels les pâtes alimentaires sont destinées à être formées,
- un système de découpe desdits extrudats en sortie desdites buses d'extrusion,
caractérisé en ce que ledit système de découpe est modulaire et comprend une pluralité de modules, chacun desdits modules comprenant un noyau et au moins un couteau porté par le noyau, lesdits modules étant assemblés en rang les uns aux autres par leurs noyaux respectifs, de façon démontable, pour former un sous-ensemble unitaire de modules immobilisés les uns par rapport aux autres, ledit sous-ensemble unitaire étant monté mobile à rotation relativement auxdites buses d'extrusion, selon un axe de rotation.

Les objets assignés à l'invention sont également atteints à l'aide d'une installation de fabrication de pâtes alimentaires destinées à être réchauffées et/ou cuites avant d'être consommées, ladite installation incluant au moins :
- un poste de fabrication d'une composition pâteuse à partir de laquelle lesdites pâtes alimentaires sont destinées à être fabriquées,
- un dispositif de formage selon l'invention.

Les objets assignés à l'invention sont enfin atteints à l'aide d'un procédé de fabrication de pâtes alimentaires destinées à être réchauffées et/ou cuites avant d'être consommées, ledit procédé comprenant :
- une opération d'extrusion au cours de laquelle une composition pâteuse passe par des buses d'extrusion pour former, en sortie desdites buses, des extrudats à partir desquels les pâtes alimentaires sont destinées à être formées,
- une opération de découpe desdits extrudats en sortie desdites buses d'extrusion, pour former par exemple des boulettes, des boudins et / ou des palets,
caractérisé en ce que ladite opération de découpe est effectuée au moyen d'un système de découpe modulaire qui comprend une pluralité de modules, chacun desdits modules comprenant un noyau et au moins un couteau porté par le noyau, lesdits modules étant assemblés en rang les uns aux autres par leurs noyaux respectifs, de façon démontable, pour former un sous-ensemble unitaire de modules immobilisés les uns par rapport aux autres, ledit sous-ensemble unitaire étant monté mobile à rotation relativement auxdites buses d'extrusion, selon un axe de rotation.

D'autres particularités et avantages de l'invention apparaîtront et ressortiront plus en détail à la lecture de la description faite ci-après, en référence aux dessins annexés, donnés uniquement à titre d'exemples illustratifs et non limitatifs, parmi lesquels :
La figure 1 illustre, selon une vue schématique en perspective avant, un détail de réalisation d'un dispositif de formage de pâtes alimentaires conforme à l'invention.
La figure 2 illustre, selon une vue schématique en perspective arrière, le détail de réalisation du dispositif de formage de la figure 1.
La figure 3 illustre, selon une vue schématique en perspective, un système de découpe modulaire qui fait partie du dispositif de formage des figures 1 et 2.
La figure 4 est une vue schématique en coupe transversale du détail de réalisation des figures 1 et 2.

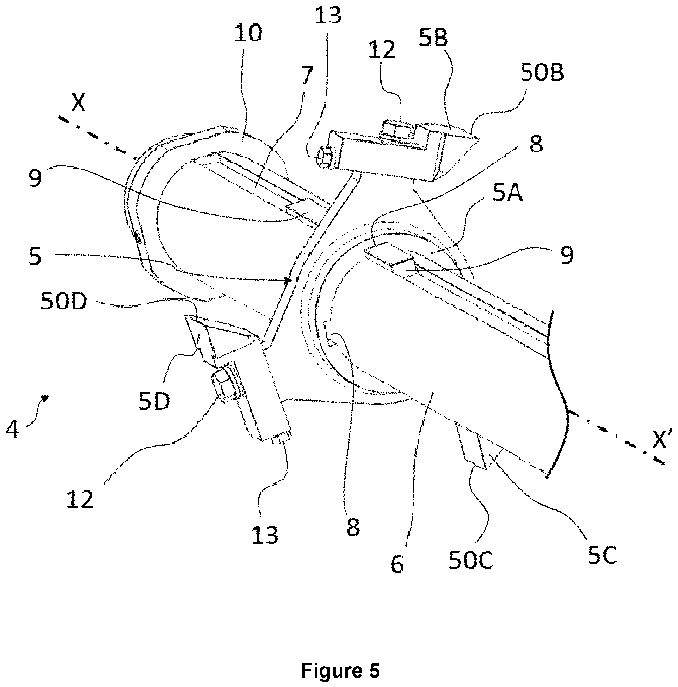

La figure 5 illustre, selon une vue schématique en perspective, un détail de réalisation du système de découpe modulaire mis en oeuvre par le dispositif de formage illustré aux figures précédentes, avec en particulier un arbre central sur lequel est ménagée une rainure de clavette, un module qui est muni d'une pluralité de mortaises et est enfilé sur l'arbre central, ainsi qu'une clavette insérée à la fois dans l'une desdites mortaise et ladite rainure pour bloquer ainsi en rotation ledit module par rapport à l'arbre central.

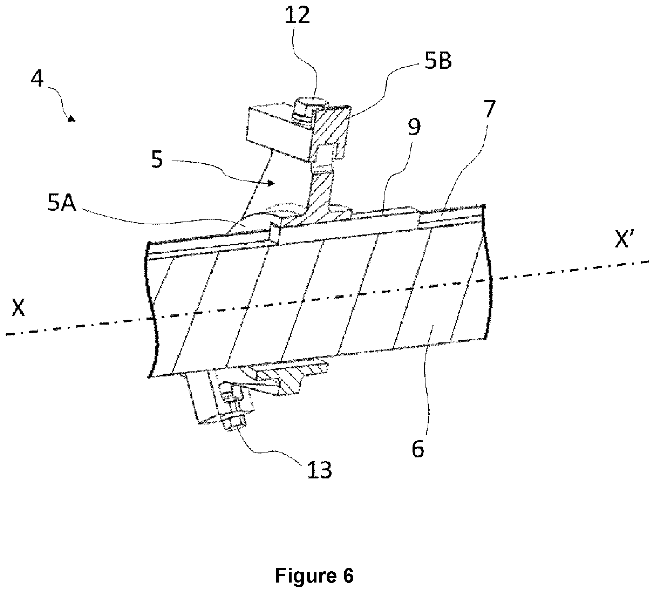

La figure 6 est une vue schématique en coupe longitudinale du détail de réalisation de la figure 5.

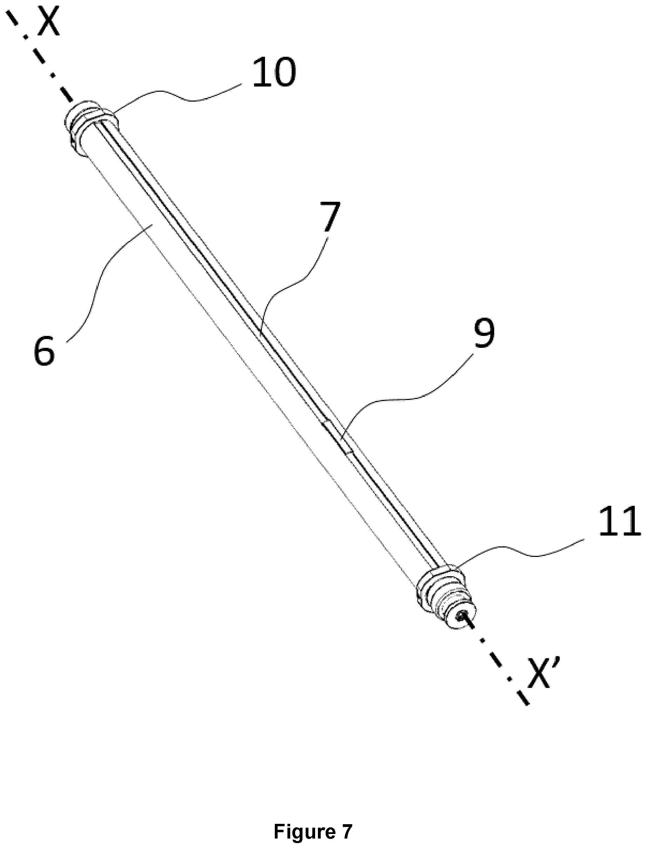

La figure 7 illustre l'arbre central des figures 5 et 6, avec une clavette disposée dans sa rainure longitudinale et des flasques de maintien enfilés sur l'arbre central et fixés à chacune des extrémités de ce dernier.

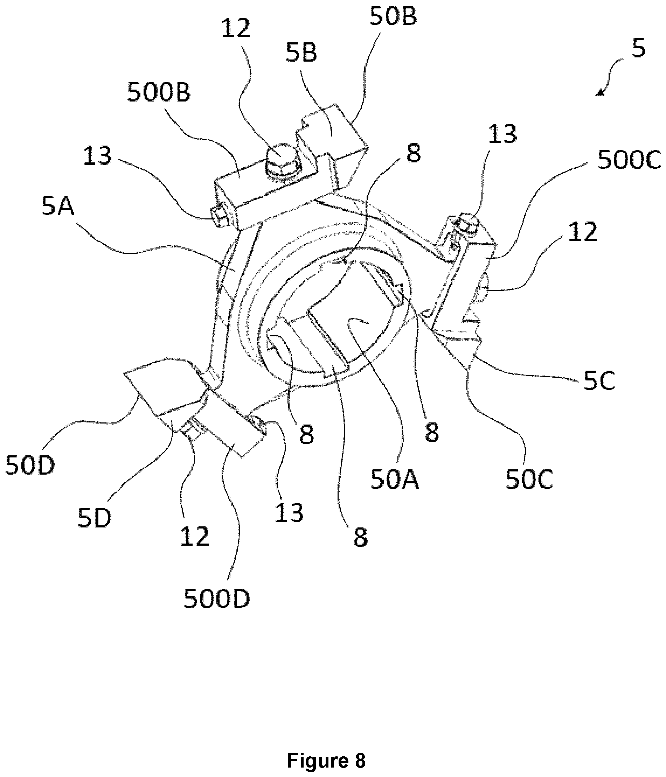

La figure 8 illustre, selon une vue schématique en perspective, un module du système de découpe modulaire mis en oeuvre par le dispositif de formage illustré aux figures précédentes.
La figure 9 illustre, selon une vue schématique de dessus, deux modules du système de découpe illustrés aux figures précédentes et qui sont adjacents dans le rang formant le sous-ensemble unitaire de modules, avec leurs couteaux respectifs décalés angulairement.

L'invention concerne un dispositif de formage 1 de pâtes alimentaires, qui est destiné à faire partie d'une installation de fabrication de pâtes alimentaires. Ladite installation de fabrication, qui constitue en tant que telle un des aspects de l'invention, est donc avantageusement une installation de pastification, pour fabriquer des pâtes alimentaires. L'installation de fabrication en question, qui inclut ledit dispositif de formage 1 selon l'invention, est avantageusement une installation de fabrication industrielle automatisée, conçue pour assurer de préférence une fabrication de pâtes en continu. De la même manière, le dispositif de formage 1 selon l'invention est lui-même un dispositif de formage industriel automatisé, conçu pour assurer de préférence un formage des pâtes alimentaires en continu.

Les pâtes alimentaires formées au moyen du dispositif de formage 1 selon l'invention, et fabriquées au moyen de l'installation de fabrication selon l'invention (laquelle inclut ledit dispositif de formage 1), sont destinées à être réchauffées et/ou cuites avant d'être consommées. Il s'agit donc de pâtes alimentaires qui ne sont pas prévues pour être consommées, mangées, en l'état, mais qui nécessitent au contraire une opération préalable de réchauffage et/ou de cuisson afin de développer pleinement leurs qualités organoleptiques. Les pâtes alimentaires en question peuvent être réchauffées ou cuites par immersion dans un liquide chaud, comme par exemple de l'eau portée à ébullition. Alternativement, elles peuvent être destinées à être réchauffées ou cuites à la poêle, c'est-à-dire être poêlées, en présence par exemple d'un corps gras (huile végétale, beurre...). Au sens de l'invention, le terme « *pâte alimentaire* » n'est pas limité à une définition légale ou normative, et concerne tout aliment obtenu à partir d'un mélange qui inclut au moins une farine et/ou une semoule de céréale et un liquide d'hydratation. Avantageusement, lesdites pâtes alimentaires fabriquées au moyen du dispositif de formage 1 selon l'invention sont destinées à être conservées au réfrigérateur (par exemple à une température comprise entre 0°C et 4°C) avant cuisson et consommation, et sont destinées par exemple à être vendues au rayon « *frais* » des magasins. Lesdites pâtes alimentaires fabriquées au moyen du dispositif 1 selon l'invention sont avantageusement des pâtes farcies, comme par exemple des ravioles ou des tortellinis, c'est-à-dire qu'elles englobent un coeur de farce dont elles sont fourrées. Par exemple, la farce en question peut être une préparation comprenant du fromage ou une spécialité fromagère, et / ou une purée de légume(s) et / ou de la viande hachée, *etc.*

Lesdites pâtes alimentaires sont plus précisément destinées à être formées à partir d'une composition pâteuse. Cette dernière est avantageusement fabriquée par malaxage et cuisson d'un mélange formé à partir au moins d'une part d'une farine et/ou d'une semoule d'au moins une céréale contenant des protéines capables de former du gluten et d'autre part d'un liquide d'hydratation. À l'issue du malaxage et de la cuisson, de préférence simultanés, dudit mélange, est obtenue une substance molle, malléable, qui se présente sous la forme d'une masse cohésive, sensiblement homogène, présentant la consistance d'une pâte, avec en particulier une capacité d'écoulement. La mise en oeuvre d'une céréale (ou d'un mélange de céréales) qui contient des protéines (typiquement des prolamines et des glutamines) capable de former du gluten confère à la composition pâteuse une certaine élasticité, laquelle contribue avantageusement notamment à une bonne tenue des pâtes alimentaires lors du réchauffage ou de la cuisson, et à l'obtention d'une texture relativement ferme et élastique des pâtes après réchauffage ou cuisson de ces dernières. De préférence, ladite céréale est du blé. Ladite farine de céréales avantageusement mise en oeuvre pour obtenir la composition pâteuse est alors préférentiellement une farine de blé tendre, tandis que ladite semoule de céréales avantageusement mise en oeuvre pour obtenir la composition pâteuse est préférentiellement une farine de blé dur. Bien évidemment, d'autres céréales peuvent être mises en oeuvre, comme par exemple l'orge, l'épeautre, le seigle, ou encore l'avoine, cette liste n'étant pas limitative.

Le mélange à partir duquel est formé la composition pâteuse peut inclure en outre d'autres ingrédients en plus de la farine et/ou de la semoule de céréales et du liquide d'hydratation. Ces ingrédients complémentaires peuvent inclure par exemple des oeufs, du lait, du gluten, des légumes ou extraits de légumes, ou encore des aromates, ou tout autre adjuvant.

Selon un mode de réalisation préférentiel particulier, le mélange à partir duquel est formé la composition pâteuse inclut avantageusement un féculent, comme par exemple du tubercule de *Solanum tuberosum.* Dans ce cas, le mélange en question comprend préférentiellement des flocons (préférentiellement déshydratés) et/ou de la poudre et/ou des granules de tubercule de *Solanum tuberosum,* ou encore une purée de tubercule de *Solanum tuberosum* (préparation humide de tubercule de *Solanum tuberosum* écrasé), mélangés avec la farine et/ou la semoule de céréales et le liquide d'hydratation, pour former par exemple des produits en forme de boulettes ou boudins.

De préférence, le liquide d'hydratation est de l'eau, mais il peut alternativement s'agir d'un autre liquide, par exemple du lait ou un liquide d'origine végétale, ou tout autre liquide permettant, en étant dosé de manière appropriée, l'obtention d'une composition de consistance pâteuse. Le liquide d'hydratation peut éventuellement être déjà inclus, en tout ou partie, dans certains des autres ingrédients (par exemple dans de la purée de tubercule de *Solanum tuberosum*)*.*

De préférence, lesdites pâtes alimentaires sont des pâtes fraîches avec un taux d'humidité qui est supérieur à 12 % en masse, de façon préférentielle supérieur à 20 % en masse, et de façon encore plus préférentielle supérieur à 30 % en masse.

Avantageusement, les pâtes alimentaires fabriquées au moyen du dispositif 1 de fabrication selon l'invention se présentent sous la forme de boulettes, boudins et/ou palets formés à partir de la composition pâteuse, et qui sont éventuellement farcis ou fourrés, comme évoqué précédemment, avec une farce qui peut être une préparation comprenant du fromage ou une spécialité fromagère, et / ou une purée de légume(s) et / ou de la viande hachée. Lesdites pâtes alimentaires forment par exemple des tortellinis ou des ravioles.

Par exemple, dans le cas où les pâtes alimentaires fabriquées au moyen du dispositif 1 sont sous forme de boulettes ou boudins, le mélange permettant d'obtenir la composition pâteuse est formé à partir au moins de :
- 15 % à 40 % en masse de farine et/ou de semoule de céréales ;
- 10 à 25 % en masse de flocons de tubercule de *Solanum tuberosum* déshydraté,
- 40 à 60 % en masse d'eau.

Ledit mélange est en revanche dépourvu d'agent levant (ou agent de levage), qu'il s'agisse d'un agent de levage chimique (poudre à lever ou levure chimique) ou naturelle (levure) de sorte que la composition pâteuse est avantageusement obtenue sans levage biologique (et donc sans fermentation) ou chimique.

Ladite installation de fabrication inclut ainsi au moins le dispositif de formage 1 selon l'invention, ainsi qu'au moins un poste de fabrication de ladite composition pâteuse à partir de laquelle lesdites pâtes alimentaires sont destinées à être fabriquées. Ledit poste de fabrication de la composition pâteuse inclut par exemple des moyens de malaxage et cuisson des ingrédients formant la composition pâteuse, et par exemple des moyens de malaxage et cuisson d'un mélange formé à partir d'au moins d'une farine et/ou d'une semoule d'au moins une céréale contenant des protéines capables de former du gluten et d'un liquide d'hydratation.

De préférence, ladite installation de fabrication de pâtes alimentaires comprend une cuve conçue pour contenir ladite composition pâteuse à partir de laquelle les pâtes alimentaires sont destinées à être formées, ladite cuve étant avantageusement conçue pour alimenter ledit dispositif de formage 1 et/ou faisant partie de ce dernier.

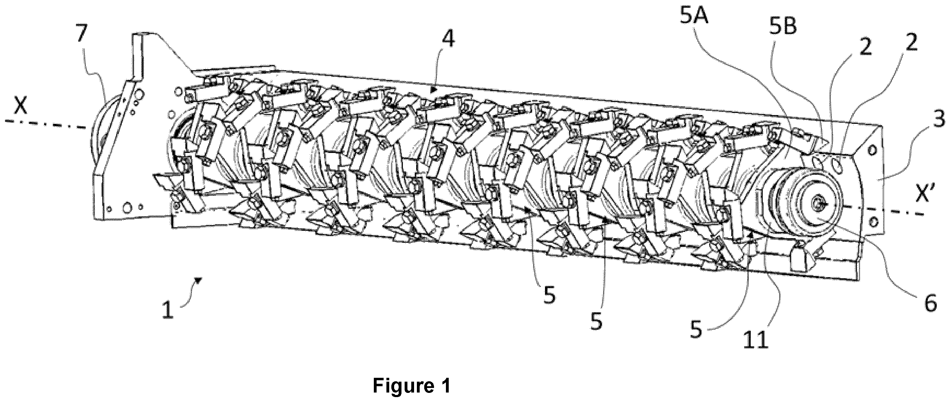

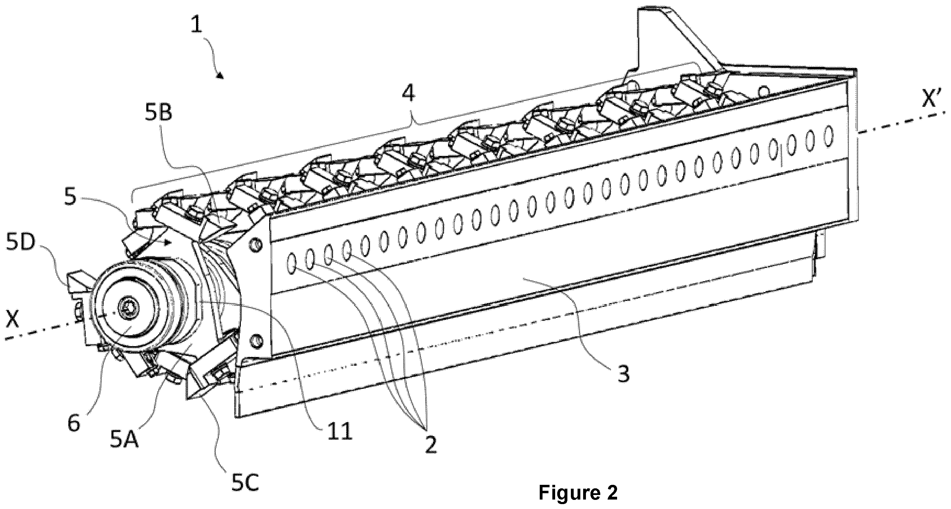

Comme illustré par les figures 1, 2 et 4, le dispositif de formage 1 selon l'invention comprend des buses d'extrusion 2 par lesquelles est destinée à passer ladite composition pâteuse, pour former, en sortie desdites buses 2, des extrudats à partir desquels les pâtes alimentaires sont destinées à être formées. Lesdites buses d'extrusion 2 sont par exemple associées à la cuve précitée pour être par exemple alimentées en composition pâteuse provenant de ladite cuve. Selon ce mode de réalisation préférentiel, les buses d'extrusion 2 sont en communication fluidique avec l'intérieur de la cuve, pour permettre un écoulement de la composition pâteuse contenue dans la cuve par les buses d'extrusion, vers l'extérieur. Les buses d'extrusion 2 se présentent avantageusement, comme illustré aux figures, sous la forme d'orifices, par exemple de forme circulaire, ménagés à travers l'épaisseur d'une plaque 3 (par exemple métallique) qui forme une filière d'extrusion. Lesdites buses d'extrusion 2 sont avantageusement disposées en rangée, les unes à côté et à distance des autres, comme illustré. Ladite rangée de buses d'extrusion 2 est avantageusement rectiligne et horizontale, comme illustré aux figures. Il est cependant parfaitement envisageable de prévoir une pluralité de rangées, et/ou de recourir à une ou plusieurs rangées qui s'étendent selon des directions rectilignes autres qu'horizontales, ou encore selon des profils curvilignes, sans pour autant que l'on sorte du cadre de l'invention.

La composition pâteuse est avantageusement destinée à passer simultanément à travers toutes les buses d'extrusion 2, de façon continue, de sorte que des extrudats, sous forme de cordons continus de composition pâteuse, sortent desdites buses d'extrusion 2.

Dans le cas où le dispositif 1 est destiné à fabriquer des pâtes alimentaires farcies, ledit dispositif 1 est avantageusement conçu pour associer la composition pâteuse avec une farce (ou garniture). Ladite association de la composition pâteuse et de la farce est effectuée par le dispositif 1 par exemple par co-extrusion de la composition pâteuse et de la farce, ce qui permet d'associer de manière rapide, simple et efficace la composition pâteuse et la farce, la composition pâteuse venant avantageusement envelopper la farce.

Avantageusement, ladite co-extrusion correspond à un assemblage, une combinaison, de la composition pâteuse et de la farce par poussage conjoint de ces dernières au travers de filières ou buses d'extrusion. On obtient de la sorte avantageusement des boulettes, boudins et / ou palets farcis (ou fourrés), et par exemple des boudins cylindriques aux extrémités fermées et d'un poids unitaire préférentiellement compris entre 6 g et 12 g environ, farce incluse. Avantageusement, de tels boulettes, boudins et / ou palets peuvent être formés de 20 % à 50 % en masse de farce (par exemple, 30 % en masse) et de 50 % à 80 % en masse de composition pâteuse (par exemple, 70 % en masse). Des proportions différentes peuvent toutefois bien évidemment être mises en oeuvre, selon notamment la nature de la composition pâteuse et / ou de la farce, ou encore selon le profil organoleptique et / ou nutritionnel recherché.

Conformément à l'invention, le dispositif de formage 1 comprend également un système de découpe 4 desdits extrudats en sortie desdites buses d'extrusion 2.

Le système de découpe 4 est avantageusement conçu pour découper automatiquement les extrudats issus de chacune des buses d'extrusion 2 en portions élémentaires (ou pâtons), de préférence de façon cyclique, pour obtenir par exemple des boulettes, boudins et/ou palets de composition pâteuse. Comme illustré aux figures, le système de découpe 4 est avantageusement disposé en sortie des buses d'extrusion 2, c'est-à-dire à l'aval de ces dernières par rapport au sens d'écoulement de la composition pâteuse dans les buses 2. Le système de découpe 4 permet ainsi avantageusement de découper de manière continue et cyclique les extrudats en sortie des buses d'extrusion 2 pour former des pâtons élémentaires (correspondant chacun à des tronçons d'extrudat), de dimensions prédéterminées, à une cadence prédéterminée impartie par la fréquence de découpe et la vitesse d'extrusion.

Comme illustré aux figures ledit système de découpe 4 est modulaire, c'est-à-dire qu'il est formé d'un ensemble de modules (composants élémentaires) associés entre eux pour former une unité de découpe monobloc. Plus précisément, le système de découpe 4 comprend une pluralité de modules 5, chacun desdits modules 5 étant constitué d'une unité individuelle distincte et indépendante. Lesdits modules 5 sont de préférence identiques les uns aux autres, ce qui permet un haut degré de standardisation. Le recours à des modules 5 identiques les uns aux autres permet ainsi de réduire les coûts, de faciliter la fabrication, la maintenance et la mise en oeuvre du système de découpe 4, comme cela ressortira plus nettement encore de ce qui suit.

Chacun desdits modules 5 comprend un noyau 5A et au moins un couteau 5B porté par le noyau 5A. Chaque noyau 5A de chacun des modules 5 est avantageusement réalisé en un matériau métallique, par exemple en acier inoxydable, tandis que chacun desdits au moins un couteau 5B porté par le noyau 5A correspondant est lui aussi réalisé en un matériau métallique, par exemple en laiton.

Chaque couteau 5B est disposé en périphérie du noyau 5A, comme illustré aux figures. Avantageusement, ledit au moins un couteau 5B de chaque module 5 est fixé de façon démontable au noyau 5A qui le porte. Il est ainsi possible de remplacer aisément un couteau 5B, par exemple par un modèle plus adapté (pour tenir compte par exemple d'un changement de filière d'extrusion), ou par le même modèle en remplacement d'un couteau détérioré ou usé.

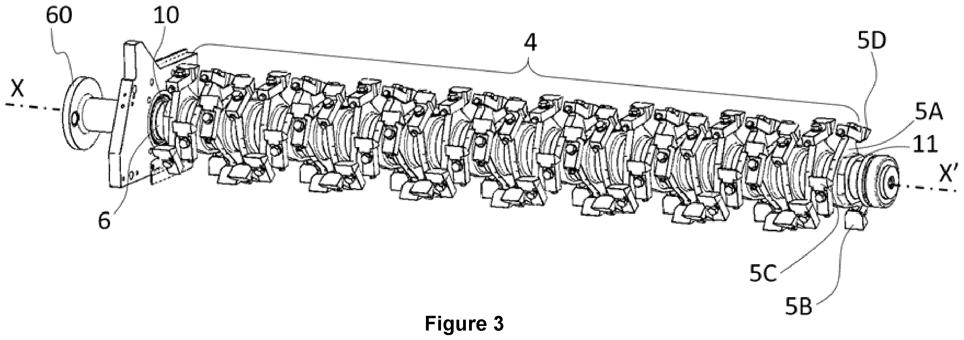

Conformément à l'invention, lesdits modules 5 sont assemblés en rang les uns aux autres par leur noyau 5A respectifs, de façon démontable, pour former un sous-ensemble unitaire (visible aux figures 1, 2, 3 et 4) de modules 5 immobilisés les uns par rapport aux autres. Les modules 5 sont ainsi reliés mécaniquement les uns aux autres par l'intermédiaire de leurs noyaux 5A respectifs. En d'autres termes, les noyaux 5A de chacun desdits modules 5 sont attachés les uns aux autres, directement ou par l'intermédiaire d'une pièce de liaison (comme dans le mode de réalisation illustré aux figures), les uns derrière les autres (i.e. les uns à la suite des autres), pour former une rangée de modules 5 dans laquelle chaque module est interposé entre deux autres modules (à l'exception bien sûr des deux modules 5 extrémaux situés respectivement à chaque extrémité de la rangée formant ledit sous-ensemble unitaire de modules 5). La liaison mécanique mise en oeuvre pour relier tous les noyaux 5A les uns aux autres est avantageusement une liaison qui permet d'immobiliser lesdits noyaux 5A les uns par rapport aux autres, au moins en rotation. Cela signifie qu'au sein dudit sous-ensemble unitaire de modules 5, lesdits modules 5 ne jouissent avantageusement d'aucune faculté de mobilité les uns par rapport aux autres, en particulier en rotation.

Ainsi, grâce à l'invention, il est possible d'assembler/désassembler chaque module 5 du sous-ensemble unitaire de modules 5, ce qui permet de modifier à volonté la configuration du système de découpe 4, de façon extrêmement simple et rapide, pour tenir compte par exemple d'un changement de filière d'extrusion, et de faciliter également la maintenance et la réparation du système de découpe 4.

Comme illustré aux figures, ledit sous-ensemble unitaire de modules 5 est monté mobile à rotation, relativement auxdites buses d'extrusion 2, selon un axe de rotation X-X'. Avantageusement, ledit dispositif de formage comprend un bâti, qui supporte les buses d'extrusion 2 ainsi que ledit sous-ensemble unitaire de modules 5. Lesdites buses d'extrusion 2 sont avantageusement fixes par rapport audit bâti, tandis que ledit sous-ensemble unitaire de modules 5 est monté à rotation par rapport audit bâti, selon l'axe de rotation X-X'. Le dispositif de formage 1 comprend avantageusement un moteur (par exemple électrique) qui est relié audit sous-ensemble unitaire pour entraîner ce dernier en rotation selon l'axe de rotation X-X'.

De préférence, ledit sous-ensemble unitaire de module 5 s'étend longitudinalement selon une direction d'extension longitudinale sensiblement parallèle audit axe de rotation X-X'. En d'autres termes, le sous-ensemble unitaire de module 5 forme avantageusement une rangée rectiligne de modules 5 disposés les uns à côté des autres (ou les uns derrière les autres selon le point de vue), ladite rangée s'étendant sensiblement parallèlement à l'axe de rotation X-X'. Dans ce mode de réalisation préférentiel, qui correspond à celui illustré aux figures, le sous-ensemble unitaire de modules 5, qui forme le système de découpe 4, affecte la forme globale d'un rouleau de découpe muni d'arêtes tranchantes à sa périphérie. Le sous-ensemble unitaire est dans ce cas avantageusement disposé au droit et en regard des buses d'extrusion 2 (comme illustré) pour couper chaque extrudat de façon cyclique (sous l'effet de ladite rotation), sensiblement immédiatement à la sortie des buses d'extrusion 2.

Avantageusement, chaque module 5 comprend une pluralité de couteaux 5B, 5C, 5D porté par son noyau 5A. Le recours à plusieurs couteaux 5B, 5C, 5D porté par un seul et même noyau 5A permet de bénéficier d'une fréquence de découpe plus élevée, tout en préservant lesdits couteaux 5B, 5C, 5D qui viennent à tour de rôle, l'un après l'autre, découper l'extrudat issu de l'une des buses d'extrusion 2 en regard de laquelle est disposé le module 5 en question. Avantageusement, lesdits couteaux 5B, 5C, 5D sont disposés selon une répartition angulaire régulière autour du noyau 5A, comme illustré aux figures. Par exemple, dans le mode de réalisation préférentiel illustré aux figures, chaque module 5 comprend un noyau 5A qui porte trois couteaux 5B, 5C, 5D, ces derniers étant disposés à équidistance les uns des autres, c'est-à-dire qu'ils sont séparés deux à deux d'un angle α sensiblement égal à 120°.

Avantageusement, chaque module 5 présente une symétrie de rotation discrète d'ordre n selon ledit axe de rotation X-X', avec n ≥ 2, et de préférence avec n ≥ 3. Dans le mode de réalisation illustré aux figures, chaque module 5 présente une symétrie de rotation discrète d'ordre 3 selon l'axe de rotation X-X'.

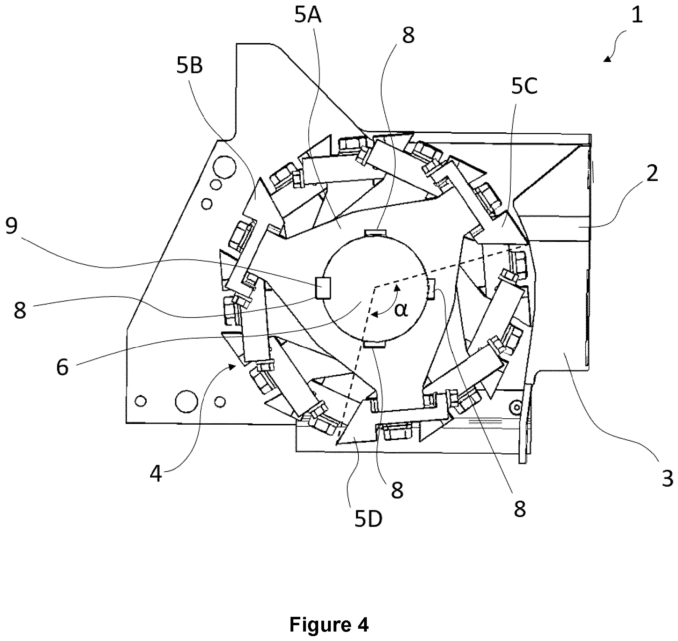

Avantageusement, chaque couteau 5B, 5C, 5D présente une arête de coupe 50B, 50C, 50D qui s'étend sensiblement parallèlement audit axe de rotation X-X'. Chaque arête de coupe 50B, 50C, 50D forme ainsi un bord tranchant, avantageusement formé par la jonction de deux pans inclinés l'un par rapport à l'autre, comme illustré aux figures. Chaque arête de coupe 50B, 50C, 50D est donc avantageusement rectiligne, parallèle audit axe de rotation X-X' et à équidistance de ce dernier. Ainsi, la trajectoire opérée par chaque arête de coupe 50B, 50C,50D lors de la mise en rotation du sous-ensemble unitaire selon l'axe de rotation X-X' s'inscrit dans un cylindre de révolution d'axe X-X', ledit cylindre venant préférentiellement tangenter la sortie de chaque buse d'extrusion 2, comme cela ressort en particulier de la figure 4.

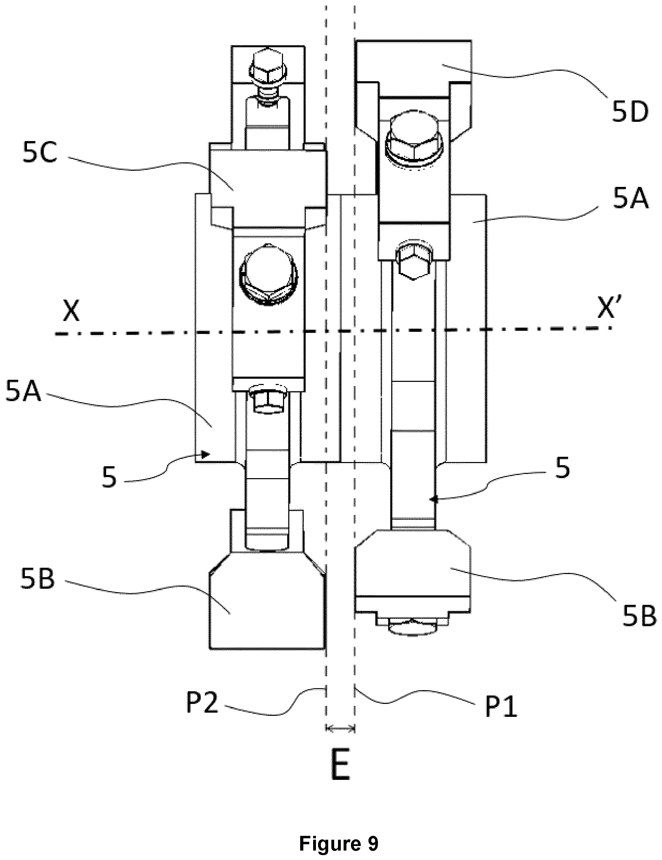

Avantageusement, chaque couteau 5B, 5C, 5D de chaque module 5 s'étend, selon la direction d'extension longitudinale (parallèle à l'axe de rotation X-X') entre un plan gauche P1 et un plan droit P2 perpendiculaires à ladite direction d'extension longitudinale. Comme illustré en particulier à la figure 9, le plan gauche P1 d'un module 5 au sein du rang qui forme le sous-ensemble unitaire est distant du plan droit P2 d'un autre module 5 qui lui est adjacent au sein dudit rang, pour ménager un espace libre E selon la direction d'extension longitudinale (parallèle à l'axe de rotation X-X'). Ainsi, les couteaux 5B, 5C, 5D portés par un module 5 sont séparés de ceux portés par un autre module 5 adjacent au sein du rang par un espace interstitiel libre E selon la direction d'extension longitudinale. Grâce à la présence de cet espace longitudinal libre E, il est possible de distribuer efficacement de la farine (ou tout autre ingrédient de lubrification pulvérulent ou liquide) sur les extrudats issus des buses 2, à partir par exemple d'une réserve de farine disposée avantageusement au-dessus du système de découpe 4. La farine peut circuler aisément dans les espaces interstitiels E sans être bloquée par les couteaux 5B, 5C, 5D des modules 5, ce qui permet un farinage efficace et ainsi une lubrification optimale.

Avantageusement, chaque module 5 est agencé avec un décalage angulaire par rapport à un autre desdits modules 5 qui lui est adjacent dans le rang, pour que lesdits couteaux 5B, 5C, 5D soient disposés selon une répartition hélicoïdale le long dudit axe de rotation X-X'. Dans ce mode de réalisation préférentiel, qui est illustré aux figures, les couteaux 5B, 5C, 5D de chaque paire de modules 5 adjacents au sein du rang ne sont pas alignés selon la direction d'extension longitudinale (parallèle à l'axe de rotation X-X'), de sorte à suivre un profil en hélice le long du sous-ensemble unitaire 5. Ceci permet de faire en sorte que les extrudats issus des buses d'extrusion 2 soient découpés les uns après les autres, de façon cyclique, et non tous en même temps de manière cyclique. Ce cycle de découpe séquentielle permet d'étaler les efforts mécaniques dans le temps et le long du sous-ensemble unitaire de module 5, ce qui évite des sollicitations mécaniques susceptibles de détériorer le matériel et/ou d'affecter la précision de découpe.

Avantageusement, le système de découpe 4 comprend un arbre central 6, qui est coaxial audit axe de rotation X-X' et qui est avantageusement conçu pour impartir au sous-ensemble unitaire de modules 5 un mouvement de rotation selon l'axe de rotation X-X'. Ledit arbre central 6 est avantageusement réalisé en métal, par exemple en acier inoxydable. L'arbre central 6 forme ainsi un arbre de transmission, qui présente avantageusement une forme globalement cylindrique, pleine ou creuse (forme tubulaire). Ledit arbre central 6 est avantageusement pourvu, à l'une de ses extrémités, d'un flasque 60 relié à un arbre de sortie du moteur précité qui assure la rotation, à une vitesse prédéterminée, de l'arbre central 6 selon l'axe de rotation X-X'.

Avantageusement, et comme illustré aux figures, chacun desdits noyaux 5A de chaque module 5 forme un moyeu qui est pourvu d'un orifice central et est enfilé sur ledit arbre central 6 pour que ce dernier passe par l'orifice central de chaque moyeu. Tous les modules 5 sont ainsi enfilés les uns à la suite des autres sur et le long de l'arbre central 6, qui traverse ainsi les moyeux formés par les noyaux 5A de chaque module 5. Chaque noyau 5A forme avantageusement dans ce cas un manchon (ou bague) enfilé sur l'arbre central 6 et portant sur sa surface extérieure, en périphérie, le ou lesdits couteaux 5B, 5C, 5D, ces derniers étant reliés au moyeu qui les porte par des rayons respectifs qui s'étendent radialement à partir du moyeu, en considération de l'axe de rotation X-X'.

Lesdits moyeux formés par les noyaux 5A viennent avantageusement en butée les uns contre les autres, c'est-à-dire que le moyeu d'un module 5 donné vient en butée contre le moyeu d'un autre module 5 qui lui est adjacent dans ledit rang de modules 5 formant le sous-ensemble unitaire. Avantageusement, chaque noyau 5A déborde latéralement (selon la direction d'extension longitudinale) des plans gauche P1 et droit P2, ce qui permet de ménager l'espace libre E évoqué précédemment, par simple mise en butée des modules 5 les uns contre les autres, sur et le long dudit arbre central 6.

Avantageusement, afin de permettre à l'arbre central 6 d'entraîner en rotation les modules 5 et assurer ainsi l'opération de découpe cyclique en sortie des buses d'extrusion 2, ledit système de découpe 4 comprend des moyens de liaison en rotation de chaque moyeu audit arbre central 6. Lesdits moyens de liaison en rotation comprennent par exemple, conformément au mode de réalisation illustré aux figures, des moyens de liaison par clavetage. Dans ce mode de réalisation préférentiel, chaque moyeu comprend une paroi annulaire 50A qui délimite ledit orifice central, lesdits moyens de liaison en rotation comprenant quant à eux :
- au moins des rainure de clavette 7 d'une part et mortaise 8 d'autre part ménagées respectivement sur l'arbre central 6 d'une part et sur chaque paroi annulaire 50A de chaque module 5 d'autre part.
- des clavettes 9, qui sont chacune reçues à la fois dans lesdites rainure 7 et mortaise 8, pour immobiliser ainsi en rotation chaque module 5 par rapport audit arbre central 6.

Ainsi, chaque module 5 est avantageusement fixé en rotation, selon l'axe de rotation X-X', audit arbre central 6 par une clavette 9 qui est insérée d'une part dans une rainure de clavette 7 ménagée à la surface de l'arbre central 6, comme illustré, et d'autre part dans une mortaise 8 ménagée sur la paroi annulaire 50A de chaque module 5. La rainure de clavette 7 se présente avantageusement sous la forme d'une gorge longitudinale ménagée sensiblement sur toute la longueur de l'arbre central 6, parallèlement à la direction d'extension longitudinale et à l'axe de rotation X-X'. Ladite gorge présente par exemple une section transversale rectangulaire. De la même façon, chaque mortaise 8 se présente elle aussi sous la forme d'une gorge, par exemple de section rectangulaire, tandis que chaque clavette 9 présente une forme par exemple sensiblement parallélépipédique.

Afin d'assurer un blocage axial des modules 5 enfilés sur l'arbre central 6, le système de découpe 4 comprend par exemple des butées latérales gauche 10 et droite 11 qui sont fixées à l'arbre central 6, vers chacune des extrémités de ce dernier, avec le rang de modules 5 interposé entre lesdites butées 10, 11 pour être ainsi maintenu axialement en position sur l'arbre central 6.

Bien entendu, l'invention n'est pas limitée à des moyens de liaison en rotation par clavetage comme illustré. Il est par exemple tout à fait envisageable de recourir alternativement à des moyens de liaison par cannelures ou dentelures. Dans ce cas, l'arbre central 6 ne présente pas une section cylindrique de révolution mais une section qui n'est pas de révolution et dont la forme est conjuguée à celle de chaque paroi annulaire 50A, pour permettre un entraînement en rotation de chaque moyeu par l'arbre central 6 selon l'axe de rotation X-X', sous l'effet du mouvement de rotation imparti par le moteur évoqué précédemment.

Avantageusement, le noyau 5A de chaque module 5 est pourvu d'un organe d'assemblage conçu pour immobiliser ledit module 5 par rapport aux autres modules dudit rang dans une pluralité de positions angulaires différentes. Dans le mode de réalisation illustré aux figures et décrit dans ce qui précède, l'organe d'assemblage en question consiste en une pluralité de mortaises 8 réparties de manière régulière sur chaque paroi annulaire 50A de chaque moyeu. Par exemple, la paroi annulaire 50A de chaque moyeu est pourvue, comme illustré, de quatre mortaises 8 équiangulairement réparties sur la surface cylindrique de révolution de la paroi annulaire 50A. Ceci permet d'assembler chaque module 5 selon quatre positions angulaires différentes sur l'arbre central 6, en fonction de la mortaise 8, parmi les quatre mortaises disponibles, qui est disposée en regard de la rainure de clavette 7 qui accueille la clavette 9.

Avantageusement, chaque couteau 5B, 5C, 5D est fixé au noyau 5A du module 5 dont il fait partie par des moyens d'attache qui sont embarqués par ledit module 5. Lesdits moyens d'attache incluent avantageusement un organe de verrouillage/déverrouillage 12 conçu pour évoluer entre d'une part une configuration de verrouillage dans laquelle il immobilise ledit couteau 5B, 5C, 5D dans la position instantanée que ce dernier occupe au moment où l'organe de verrouillage/déverrouillage 12 adopte sa configuration de verrouillage, et d'autre part une configuration de déverrouillage dans laquelle il autorise un déplacement du couteau 5B, 5C, 5D relativement au noyau 5A. Dans le mode de réalisation préférentiel illustré aux figures, l'organe de verrouillage / déverrouillage comprend des platines 500B, 500C, 500D, par exemple de forme parallélépipédique, qui avantageusement viennent de matière avec un couteau 5B, 5C, 5D correspondant. L'organe de verrouillage / déverrouillage inclut également une lumière oblongue ménagée à travers toute l'épaisseur de chaque platine 500B, 500C, 500D, ainsi qu'une vis qui traverse ladite lumière oblongue et vient se visser dans un puits fileté correspondant solidaire du noyau 5A. Dans ce cas de figure, la configuration de déverrouillage correspond à une configuration desserrée de ladite vis, ce qui autorise ainsi le coulissement relatif de chaque vis par rapport à chaque platine 500B, 500C, 500D correspondante, grâce à la forme oblongue de la lumière qui reçoit la vis. La configuration de verrouillage correspond quant à elle à une configuration de serrage de la vis, qui vient bloquer tout coulissement relatif de la platine correspondante 500B, 500C, 500D relativement au noyau 5A. L'organe de verrouillage/déverrouillage 12 permet ainsi d'ajuster la position de chaque couteau 5B, 5C, 5D, pour tenir compte par exemple de l'usure et/ou de la configuration des buses.

Avantageusement, lesdits moyens d'attache inclut en outre au moins un moyen de réglage 13 conçu pour ajuster, sous l'effet d'un actionnement manuel dudit moyen de réglage 13, la position d'un couteau 5B, 5C, 5D correspondant relativement audit noyau 5A qui le porte, alors que l'organe de verrouillage/déverrouillage 12 est en configuration de déverrouillage. Par exemple, dans le mode de réalisation illustré aux figures, le moyen de réglage 13 inclut une vis disposée parallèlement à la direction d'extension longitudinale de la lumière oblongue ménagée à travers la platine 500B, 500C, 500D concernée. La vis en question coopère avec un puits fileté ménagé dans le noyau 5A, de façon à permettre, en tournant ladite vis (vissage ou dévissage), de régler la position relative de la platine 500B, 500C, 500D relativement au noyau 5A.

L'invention concerne également en tant que tel un procédé de fabrication de pâtes alimentaires destinées à être réchauffées et/ou cuites avant d'être consommées.

Ledit procédé selon l'invention est donc un procédé de pastification, pour fabriquer des pâtes alimentaires destinées à être réchauffées et/ou cuites avant d'être consommées. Le procédé en question peut être mis en oeuvre, conformément à un mode de réalisation préférentiel, au moyen de l'installation de fabrication avec son dispositif de formage 1 décrit ci-avant. Dès lors, l'ensemble de la description qui précède concernant le dispositif 1 s'applique au procédé selon l'invention, et réciproquement la description qui suit relative au procédé selon l'invention s'applique au dispositif de formage 1 précité.

Il est ceci étant parfaitement envisageable que le procédé de fabrication selon l'invention soit mis en oeuvre au moyen d'un dispositif de formage qui diffère de celui décrit ci-avant.

Dans ce qui suit, par souci de concision, le procédé décrit correspond à celui mis en oeuvre par le dispositif de formage 1 selon l'invention.

Le procédé en question comprend préférentiellement une étape de réception, dans une cuve, de la composition pâteuse à partir de laquelle les pâtes alimentaires sont destinées à être formées. Ladite composition pâteuse est avantageusement conforme à la description qui précède.

Le procédé en question comprend une opération d'extrusion, au cours de laquelle la composition pâteuse passe par des buses d'extrusion 2 pour former, en sortie desdites buses 2, des extrudats à partir desquels les pâtes alimentaires sont destinées à être formées.

Le procédé comprend avantageusement, de préférence avant l'opération d'extrusion, une étape de laminage de ladite composition pâteuse pour la forcer à travers lesdites buses d'extrusion 2. Ladite étape de laminage est effectuée au moyen par exemple de rouleaux motorisés de laminage disposés à l'intérieur de la cuve précitée, pour forcer la composition pâteuse contenue dans la cuve à travers les buses d'extrusion 2, ces dernières communiquant avantageusement avec l'intérieur de ladite cuve.

Le procédé selon l'invention comprend également une opération de découpe desdits extrudats en sortie desdites buses d'extrusion 2, pour former préférentiellement des pâtons de taille et forme prédéterminées, par exemple des boulettes, des boudins et/ou des palets. Ladite opération de découpe consiste avantageusement à procéder à une découpe cyclique des extrudats sortant en continu des buses d'extrusion 2 pour obtenir des portions (pâtons) élémentaires.

L'opération de découpe est effectuée au moyen d'un système de découpe 4 modulaire, qui est par exemple conforme à la description qui précède, et qui comprend une pluralité de modules 5, chacun desdits modules 5 comprenant un noyau 5A et au moins un couteau 5B, 5C, 5D porté par ledit noyau 5A. Les modules 5 sont assemblés en rang les uns aux autres par leur noyau 5A respectif, de façon démontable, pour former un sous-ensemble unitaire de modules 5 immobilisés les uns par rapport aux autres. Comme exposé précédemment, ledit sous-ensemble unitaire est monté mobile à rotation relativement auxdites buses d'extrusion 2, selon un axe de rotation X-X'.

Avantageusement, le procédé de fabrication selon l'invention comprend une étape préalable de fabrication de ladite composition pâteuse par malaxage et cuisson d'un mélange formé à partir d'au moins une farine et/ou d'une semoule d'au moins une céréale contenant des protéines capables de former du gluten d'une part et d'un liquide d'hydratation d'autre part. Avantageusement, ledit mélange inclut en outre des ingrédients supplémentaires, comme par exemple des flocons de tubercule de *Solanum tuberosum* déshydraté, et/ou des additifs ou adjuvants divers (oeufs, etc.), comme déjà exposé dans ce qui précède en relation avec le dispositif de formage 1.

## Revendications

1. Dispositif de formage (1) de pâtes alimentaires destinées à être réchauffées et/ou cuites avant d'être consommées, ledit dispositif de formage (1) comprenant :
- des buses d'extrusion (2) par lesquelles est destinée à passer une composition pâteuse, pour former, en sortie desdites buses (2), des extrudats à partir desquels les pâtes alimentaires sont destinées à être formées,
- un système de découpe (4) desdits extrudats en sortie desdites buses d'extrusion (2),
**caractérisé en ce que** ledit système de découpe (4) est modulaire et comprend une pluralité de modules (5), chacun desdits modules (5) comprenant un noyau (5A) et au moins un couteau (5B, 5C, 5D) porté par le noyau (5A), lesdits modules (5) étant assemblés en rang les uns aux autres par leurs noyaux (5A) respectifs, de façon démontable, pour former un sous-ensemble unitaire de modules (5) immobilisés les uns par rapport aux autres, ledit sous-ensemble unitaire étant monté mobile à rotation relativement auxdites buses d'extrusion (2), selon un axe de rotation (X-X').

2. Dispositif de formage (1) selon la revendication précédente **caractérisé en ce que** lesdits modules (5) sont identiques les uns aux autres.

3. Dispositif de formage (1) selon l'une quelconque des revendications précédentes **caractérisé en ce que** le noyau (5A) de chaque module (5) est pourvu d'un organe d'assemblage conçu pour immobiliser ledit module (5) par rapport aux autres modules (5) dudit rang dans une pluralité de positions angulaires différentes.

4. Dispositif de formage (1) selon l'une quelconque des revendications précédentes **caractérisé en ce que** chaque module (5) comprend une pluralité de couteaux (5B, 5C, 5D) portés par son noyau (5A), lesdits couteaux (5B, 5C, 5D) étant disposés selon une répartition angulaire régulière autour dudit noyau (5A).

5. Dispositif de formage (1) selon l'une quelconque des revendications précédentes **caractérisé en ce que** ledit sous-ensemble unitaire s'étend longitudinalement selon une direction d'extension longitudinale sensiblement parallèle audit axe de rotation (X-X'), chaque couteau (5B, 5C, 5D) de chaque module (5) s'étendant, selon la direction d'extension longitudinale, entre des plans gauche (P1) et droit (P2) perpendiculaires à ladite direction d'extension longitudinale, le plan gauche (P1) d'un module (5) étant distant du plan droit (P2) d'un autre module (5) qui lui est adjacent au sein dudit rang, pour ménager un espace libre (E) selon la direction d'extension longitudinale.

6. Dispositif de formage (1) selon l'une quelconque des revendications précédentes **caractérisé en ce que** chaque module (5) présente une symétrie de rotation discrète d'ordre n selon ledit axe de rotation (X-X'), avec n ≥ 2, de préférence avec n ≥ 3.

7. Dispositif de formage (1) selon l'une quelconque des revendications précédentes **caractérisé en ce que** chaque couteau (5B, 5C, 5D) présente une arête de coupe (50B, 50C, 50D) qui s'étend sensiblement parallèlement audit axe de rotation (X-X').

8. Dispositif de formage (1) selon l'une quelconque des revendications précédentes **caractérisé en ce que** ledit au moins un couteau (5B) de chaque module (5) est fixé de façon démontable au noyau (5A) qui le porte.

9. Dispositif de formage (1) selon l'une quelconque des revendications précédentes **caractérisé en ce que** chaque couteau (5B, 5C, 5D) est fixé au noyau (5A) du module (5) dont il fait partie par des moyens d'attache qui sont embarqués par ledit module (5) et incluent un organe de verrouillage / déverrouillage (12) conçu pour évoluer entre d'une part une configuration de verrouillage dans laquelle il immobilise ledit couteau (5B, 5C, 5D) dans la position instantanée que ce dernier occupe au moment où l'organe de verrouillage / déverrouillage (12) adopte sa configuration de verrouillage, et une configuration de déverrouillage dans laquelle il autorise un déplacement du couteau (5B, 5C, 5D) relativement au noyau (5A), lesdits moyens d'attache incluant en outre au moins un moyen de réglage (13) conçu pour ajuster, sous l'effet d'un actionnement manuel dudit moyen de réglage (13), la position dudit couteau (5B, 5C, 5D) relativement audit noyau (5A) alors que l'organe de verrouillage / déverrouillage (12) est en configuration de déverrouillage.

10. Dispositif de formage (1) selon l'une quelconque des revendications précédentes **caractérisé en ce que** chaque module (5) est agencé avec un décalage angulaire par rapport à un autre desdits modules (5) qui lui est adjacent dans le rang, pour que lesdits couteaux (5B, 5C, 5D) soient disposés selon une répartition hélicoïdale le long dudit axe de rotation (X-X').

11. Dispositif de formage (1) selon l'une quelconque des revendications précédentes **caractérisé en ce que** ledit système de découpe (4) comprend un arbre central (6), chacun desdits noyaux (5A) formant un moyeu qui est pourvu d'un orifice central et est enfilé sur ledit arbre central (6) pour que ce dernier passe par l'orifice central de chaque moyeu, ledit système de découpe (4) comprenant des moyens de liaison en rotation de chaque moyeu audit arbre central (6).

12. Installation de fabrication de pâtes alimentaires destinées à être réchauffées et/ou cuites avant d'être consommées, ladite installation incluant au moins :
- un poste de fabrication d'une composition pâteuse à partir de laquelle lesdites pâtes alimentaires sont destinées à être fabriquées,
- un dispositif de formage (1) selon l'une quelconque des revendications précédentes.

13. Procédé de fabrication de pâtes alimentaires destinées à être réchauffées et/ou cuites avant d'être consommées, ledit procédé comprenant :
- une opération d'extrusion au cours de laquelle une composition pâteuse passe par des buses d'extrusion (2) pour former, en sortie desdites buses (2), des extrudats à partir desquels les pâtes alimentaires sont destinées à être formées,
- une opération de découpe desdits extrudats en sortie desdites buses d'extrusion (2), pour former par exemple des boulettes, des boudins et / ou des palets,
**caractérisé en ce que** ladite opération de découpe est effectuée au moyen d'un système de découpe (4) modulaire qui comprend une pluralité de modules (5), chacun desdits modules (5) comprenant un noyau (5A) et au moins un couteau (5B, 5C, 5D) porté par le noyau (5A), lesdits modules (5) étant assemblés en rang les uns aux autres par leurs noyaux (5A) respectifs, de façon démontable, pour former un sous-ensemble unitaire de modules (5) immobilisés les uns par rapport aux autres, ledit sous-ensemble unitaire étant monté mobile à rotation relativement auxdites buses d'extrusion (2), selon un axe de rotation (X-X').

14. Procédé de fabrication selon la revendication précédente **caractérisé en ce qu'**il comprend une étape de laminage de ladite composition pâteuse pour la forcer à travers lesdites buses d'extrusion (2).

15. Procédé de fabrication selon la revendication 13 ou 14 **caractérisé en ce qu'**il comprend une étape préalable de fabrication de ladite composition pâteuse par malaxage et cuisson d'un mélange formé à partir au moins d'une farine et / ou d'une semoule d'au moins une céréale contenant des protéines capables de former du gluten et d'un liquide d'hydratation.
